# EUROPEAN PATENT SPECIFICATION

(11) **EP 1 328 745 B1**
(45) Date of publication and mention of the grant of the patent: **16.08.2006**
(21) Application number: 01988832.0
(22) Date of filing: 12.10.2001
(51) Int. Cl.: F16K 11/20, F16K 31/62

(54) **FOOT-OPERATED MIXING VALVE ASSEMBLY**
FUSSBETÄTIGTE MISCHVENTILANORDNUNG
ENSEMBLE ROBINET M LANGEUR ACTIONN AU PIED

(30) Priority: 27.10.2000 IT TO20001018
(43) Date of publication of application: 23.07.2003
(73) Proprietor: Cabbia, Dianello, 13878 Candelo (IT)
(72) Inventor: Cabbia, Dianello, 13878 Candelo (IT)
(74) Representative: Robba, Pierpaolo
(86) International application number: PCT/EP2001/011877
(87) International publication number: WO 2002/035122

(56) References cited:
- GB-A- 2 060 368
- US-A- 2 830 618
- US-A- 4 499 918
- US-A- 4 860 786
- US-A- 5 263 684

## Description

The present invention relates to a foot-operated mixing cock, to be installed below a shelf for industrial use (canteens, restaurant kitchens, cooking centres, hospitals, doctor's surgeries and so on).

Nowadays, foot-operated cocks, of both mixing and non-mixing type, have the following drawbacks:
- difficult cleaning, owing to the installation at the floor level;
- difficult actuation, since a pressure is to be maintained in order to have a continuous delivery;
- lack of safety, because the levers project from the sinks;
- difficult mixing, since the actuating presure is to be co-ordinated on two independent levers by means of a single foot;
- poor balancing, since single-lever cocks have a mechanical block mounted at a certain level above the floor.

A mixing cock disclosing the features defined in the preamble of claim 1 is known from US-A-4 499 918.

It is an object of the present invention to provide a foot-operated mixing cock, which does not have the above-mentioned drawbacks and which assists in solving the practical and functional problems that have not yet been solved and that are incompatible with the present regulations.

The basic features of the mixing cock of the invention will become apparent from the appended claims.

Said mixing cock will now be described in greater detail with reference to the accompanying drawings, given by way of nonlimiting example, in which:
- Fig. 1 is a sectional plan view of the group forming the body of the mixing cock;
- Fig. 2 is a diagrammatic perspective view of a sink equipped with the body shown in Fig. 1, highlighting the foot-operated control members, raised from ground.

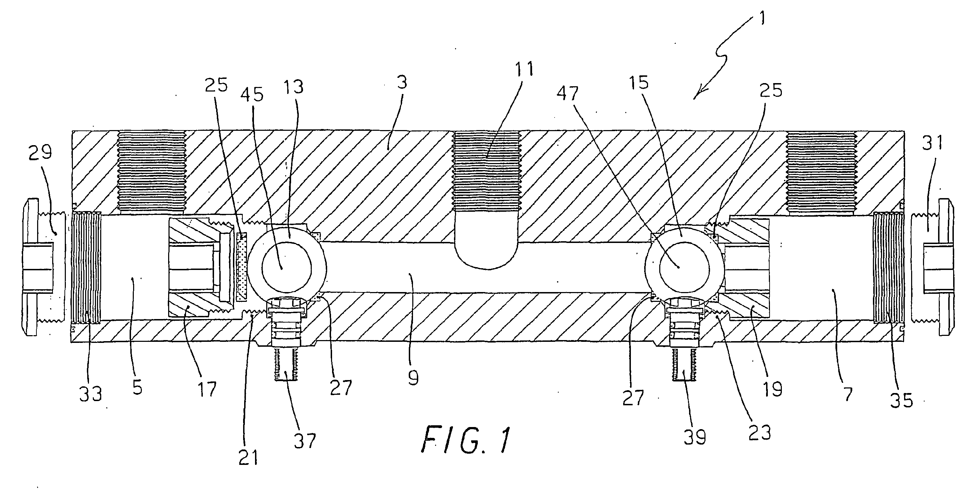

As clearly shown in Fig. 1, body 1 of the mixing cock of the invention substantially consists of a parallelepiped body 3, having on one side 5 the cold water inlet and on the other side 7 the hot water inlet. Said inlets 5 and 7 are connected by an internal duct 9, longitudinally arranged in body 3 and communicating with outlet duct 11 for mixed water.

Said inlets 5 and 7 are each equipped with a ball valve 13 and 15, secured through a respective threaded member 17 and 19, engaging a respective threaded zone 21 and 23 provided at the ends of duct 9.

Suitable gaskets 25 and 27 are provided between said threaded members 17 and 19 and ball valves 13 and 15, respectively, to ensure a tight mounting of the valves in body 3.

Of course, the chambers of inlets 5 and 7 are closed towards the outside by respective threaded caps 29 and 31, which are screwed into respective internally threaded zones 33 and 35 of said chambers.

Ball valves 13 and 15 have applied thereto, outside body 3, suitable actuating pins 37 and 39, respectively, to which foot-operated actuating levers 41 and 43, respectively, are applied.

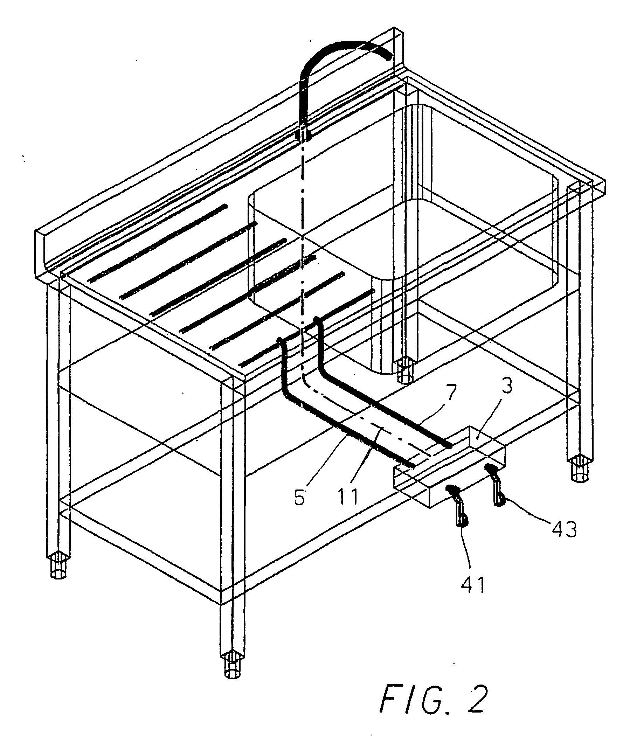

Ball valves 13 and 15 have suitable internal cavities 45 and 47, whereby rotation of actuating pins 37 and 39, controlled by foot-operated levers 41 and 43 (see also Fig. 2), causes the partial or complete opening of said valves and consequently the opening of the respective duct inlet to a desired extent.

In Fig. 1 ball valves 13 and 15 are shown in closed condition, with securing member 17 of valve 5 in a condition taken during a mounting phase, whereas securing member 19 of valve 7 is shown in mounted condition.

The advantages attainable by the mixing cock of the invention are immediately apparent:
- the structure is compact and it can be readily cleaned,
- installation below a shelf is made easier;
- the operation is safe, in that the cock can be operated without use of levers projecting from the shelf, while actuation, delivery and mixing are controlled with the foot tip and the heel resting on the floor; and
- the levers can have different sizes for shelves located at different levels.

## Claims

1. A mixing cock (1), which can be operated by foot, comprising a parallelepiped body (3), having a cold water inlet and a hot water inlet (5, 7), said inlets (5, 7) being connected by an internal duct (9), longitudinally arranged in said body (3) and communicating with an outlet duct (11) for the mixed water; said inlets (5, 7) being each equipped with a ball valve (13, 15) having an internal cavity (45, 47), and being each secured through a respective threaded member (17, 19) engaging a respective threaded zone (21, 23) provided at a respective end of said duct (9); said ball valves (13, 15) being controlled for rotation by suitable parallel actuating pins (37, 39), arranged outside said body (3) and having applied thereto actuating levers (41, 43) for controlling mixing and delivery of water, **characterised in that** said water inlets (5, 7) and said outlet duct (11) are arranged on the same side of said body (3) and **in that** said actuating levers (41, 43) are arranged substantially perpendicular with respect to said rotatable actuating pins (37, 39) on the opposite side of said body (3) with respect to both said water inlets (5, 7) and said outlet duct (9), whereby said mixing cock (1) can be operated with the foot tip without interfering with either said water inlets (5. 7) or said outlet duct (9).

2. A mixing cock (1) according to claim 1, **characterised in that** suitable gaskets (25, 27) are provided between said threaded members (17, 19) and said ball valves (13, 15), to ensure a tight mounting of said ball valves (13, 15) in the respective seats provided upstream said central duct (9) connecting said water inlets (5, 7).

3. A mixing cock (1) according to claims 1 and 2, **characterised in that** the chambers of said water inlets (5, 7) are closed towards the outside by respective threaded caps (29, 31) which are screwed into respective internally threaded zones (33, 35) provided in said chambers.

4. A mixing cock (1) according to claims 1 to 3, **characterised in that** the rotation of said ball valves (13, 15) causes, depending on the rotation amount, the opening of the respective water inlets (5, 7) to a desired extent, whereby the user can obtain the desired mixing of hot and cold water.

5. A shelf comprising a sink on the upper part thereof and a mixing cock (1) for delivering water to said sink through a corresponding outlet duct (11), said mixing cock (1), which can be operated by foot, comprising a parallelepiped body (3), having a cold water inlet and a hot water inlet (5, 7), said inlets (5, 7) being connected by an internal duct (9), longitudinally arranged in said body (3) and communicating with said outlet duct (11) for the mixed water; said inlets (5, 7) being each equipped with a ball valve (13, 15) having an internal cavity (45, 47), and being each secured through a respective threaded member (17, 19) engaging a respective threaded zone (21, 23) provided at a respective end of said duct (9); said ball valves (13, 15) being controlled for rotation by suitable parallel actuating pins (37, 39), arranged outside said body (3) and having applied thereto actuating levers (41, 43) for controlling mixing and delivery of water, **characterised in that** said water inlets (5, 7) and said outlet duct (11) are arranged on the same side of said body (3) and **in that** said actuating levers (41, 43) are arranged substantially perpendicular with respect to said rotatable actuating pins (37, 39) on the opposite side of said body (3) with respect to both said water inlets (5, 7) and said outlet duct (9), said mixing cock (1) being mounted below said shelf, whereby said mixing cock (1) can be operated with the foot tip without interfering with either said water inlets (5, 7) or said outlet duct (9).

## Patentansprüche

1. Fußbetätigte Mischbatterie (1) mit einem parallelflachen Gehäuse (3) sowie einem Kaltwassereinlass und einem Heißwassereinlass (5, 7), wobei diese Einlässe (5, 7) über einen inneren Kanal (9) verbunden sind, der längs in dem Gehäuse (3) angeordnet ist und mit einem Auslasskanal (11) für das Mischwasser in Verbindung steht; die Einlässe (5, 7) sind jeweils mit einem Kugelventil (13, 15) mit einer inneren Aussparung (45, 47) ausgerüstet und jeweils durch ein entsprechendes Gewindestück (17, 19) gesichert, das in eine entsprechende Gewindepartie (21, 23) eingreift, die an dem entsprechenden Ende jenes Kanals (9) vorgesehen ist; die Kugelventile (13, 15) werden durch geeignete, außerhalb des Gehäuses (3) angeordnete parallele Betätigungsbolzen (37, 39) drehgesteuert, an denen Betätigungshebel (41, 43) zur Steuerung des Misch- und Ausgabevorgangs des Wassers angebracht sind,
**dadurch gekennzeichnet, dass** die Wassereinlässe (5, 7) und der Auslasskanal (11) an derselben Seite des Gehäuses (3) angeordnet sind und die Betätigungshebel (41, 43) im Wesentlichen senkrecht in Bezug auf die drehbaren Betätigungsbolzen (37, 39) auf der gegenüberliegenden Seite des Gehäuses (3) in Bezug auf jene beiden Wassereinlässe (5, 7) und jenen Auslasskanal (9) angeordnet sind, wobei die Mischbatterie (1) mit der Fußspitze ohne Störung weder durch die Wassereinlässe (5, 7) noch durch den Auslasskanal (9) bedient werden kann.

2. Mischbatterie (1) nach Anspruch 1,
**dadurch gekennzeichnet, dass** zwischen den Gewindestücken (17, 19) und den Kugelventilen (13, 15) geeignete Dichtungen (25, 27) vorgesehen sind, um einen dichten Einbau jener Kugelventile (13, 15) in den jeweiligen Sitzen zu gewährleisten, die stromaufwärts des die Wassereinlässe (5, 7) verbindenden zentralen Kanals (9) vorgesehen sind.

3. Mischbatterie (1) nach den Ansprüchen 1 und 2,
**dadurch gekennzeichnet, dass** die Wassereinlasskammern (5, 7) nach außen durch entsprechende Gewindedeckel (29, 31), die in entsprechende, in den Kammern vorgesehene Innengewindepartien (33, 35) eingeschraubt werden, geschlossen werden.

4. Mischbatterie (1) nach Anspruch 1 bis 3,
**dadurch gekennzeichnet, dass** die Drehung der Kugelventile (13, 15) in Abhängigkeit von dem Betrag der Drehung eine Öffnung der jeweiligen Wassereinlässe (5, 7) in einem gewünschten Ausmaß bewirkt, wobei der Benutzer die gewünschte Mischung aus heißem und kaltem Wasser erreichen kann.

5. Schrank mit einem Spülbecken an seiner Oberseite und Mischbatterie (1) zur Versorgung jenes Spülbeckens mit Wasser durch eine entsprechende Auslassleitung (11), wobei die fußbetätigte Mischbatterie (1) ein parallelflaches Gehäuse (3) sowie einen Kaltwassereinlass und einem Heißwassereinlass (5, 7) aufweist, wobei diese Einlässe (5, 7) über einen inneren Kanal (9) verbunden sind, der längs in dem Gehäuse (3) angeordnet ist und mit einem Auslasskanal (11) für das Mischwasser in Verbindung steht; die Einlässe (5, 7) sind jeweils mit einem Kugelventil (13, 15) mit einer inneren Aussparung (45, 47) ausgerüstet und jeweils durch ein entsprechendes Gewindestück (17, 19) gesichert, das in eine entsprechende Gewindepartie (21, 23) eingreift, die an dem entsprechenden Ende jenes Kanals (9) vorgesehen ist; die Kugelventile (13, 15) werden durch geeignete, außerhalb des Gehäuses (3) angeordnete parallele Betätigungsbolzen (37, 39) drehgesteuert, an denen Betätigungshebel (41, 43) zur Steuerung des Misch- und Ausgabevorgangs des Wassers angebracht sind,
**dadurch gekennzeichnet, dass** die Wassereinlässe (5, 7) und der Auslasskanal (11) an derselben Seite des Gehäuses (3) angeordnet sind und die Betätigungshebel (41, 43) im Wesentlichen senkrecht in Bezug auf die drehbaren Betätigungsbolzen (37, 39) auf der gegenüberliegenden Seite des Gehäuses (3) in Bezug auf jene beiden Wassereinlässe (5, 7) und jenen Auslasskanal (9) angeordnet sind, wobei die Mischbatterie (1) unter dem Schrank montiert ist und mit der Fußspitze ohne Störung weder durch die Wassereinlässe (5, 7) noch durch den Auslasskanal (9) bedient werden kann.

## Revendications

1. Robinet mélangeur (1) qui peut être actionné au pied, comprenant un corps parallélépipédique (3), comportant une entrée d'eau froide et une entrée d'eau chaude (5, 7), lesdites entrées (5, 7) étant raccordées par un conduit interne (9), disposé longitudinalement dans ledit corps (3) et communiquant avec un conduit de sortie (11) destiné à l'eau mélangée ; lesdites entrées (5, 7) étant chacune pourvue d'une soupape à boulets (13, 15) comportant une cavité interne (45, 47) et étant chacune fixée par l'intermédiaire d'un élément fileté respectif (17, 19) engageant une zone filetée respective (21, 23) prévue au niveau d'une extrémité respective dudit conduit (9) ; lesdites soupapes à boulets (13, 15) étant commandées pour une rotation par des broches d'actionnement parallèles appropriées (37, 39), disposées à l'extérieur dudit corps (3) et comportant appliqués sur elles des leviers d'actionnement (41, 43) pour commander le mélange et la distribution de l'eau, **caractérisé en ce que** lesdites entrées d'eau (5, 7) et ledit conduit de sortie (11) sont disposés sur le même côté dudit corps (3) et **en ce que** lesdits leviers d'actionnement (41, 43) sont disposés de façon essentiellement perpendiculaire par rapport aux dites broches d'actionnement mobiles en rotation (37, 39), sur le côté opposé dudit corps (3) par rapport aux deux dites entrées d'eau (5, 7) et audit conduit de sortie (9), de sorte que ledit robinet mélangeur (1) peut être actionné avec la pointe du pied sans interférer avec l'une ou l'autre desdites entrées d'eau (5, 7) ou avec ledit conduit de sortie (9).

2. Robinet mélangeur (1) selon la revendication 1, **caractérisé en ce que** des garnitures d'étanchéité appropriées (25, 27) sont prévues entre lesdits éléments filetés (17, 19) et lesdites soupapes à boulets (13, 15) pour assurer un montage serré desdites soupapes à boulets (13, 15) dans les sièges respectifs prévus en amont dudit conduit central (9) raccordant lesdites entrées d'eau (5, 7) .

3. Robinet mélangeur (1) selon les revendications 1 et 2, **caractérisé en ce que** les chambres desdites entrées d'eau (5, 7) sont fermées vers le côté extérieur par des capuchons filetés respectifs (29, 31) qui sont vissés dans des zones taraudées intérieurement respectives (33, 35) prévues dans lesdites chambres.

4. Robinet mélangeur (1) selon les revendications 1 à 3, **caractérisé en ce que** la rotation desdites soupapes à boulets (13, 15) entraîne, en fonction de la quantité de rotation, l'ouverture des entrées d'eau respectives (5, 7) à une grandeur souhaitée, de sorte que l'utilisateur peut obtenir le mélange souhaité d'eau chaude et d'eau froide.

5. Tablette comprenant un évier sur sa partie supérieure et un robinet mélangeur (1) pour distribuer de l'eau audit évier par un conduit de sortie correspondant (11), ledit robinet mélangeur (1) qui peut être actionné au pied, comprenant un corps parallélépipédique (3), possédant une entrée d'eau froide et une entrée d'eau chaude (5, 7), lesdites entrées (5, 7) étant raccordées par un conduit interne (9), disposé longitudinalement dans ledit corps (3) et communiquant avec ledit conduit de sortie (11) pour l'eau mélangée ; lesdites entrées (5, 7) étant chacune pourvue d'une soupape à boulets (13, 15) comportant une cavité interne (45, 47) et étant chacune fixée par un élément fileté respectif (17, 19) engageant une zone filetée respective (21, 23) prévue au niveau d'une extrémité respective dudit conduit (9) ; lesdites soupapes à boulets (13, 15) étant commandées pour une rotation par des broches d'actionnement parallèles appropriées (37, 39) disposées à l'extérieur dudit corps (3) et comportant, appliqués sur elles, des leviers d'actionnement (41, 43) pour commander le mélange et la distribution de l'eau, **caractérisé en ce que** lesdites entrées d'eau (5, 7) et ledit conduit de sortie (11) sont agencés sur le même côté dudit corps (3) et **en ce que** lesdits leviers d'actionnement (41, 43) sont agencés de façon essentiellement perpendiculaire par rapport aux dites broches d'actionnement rotatives (37, 39) sur le côté opposé dudit corps (3) par rapport aux deux dites entrées d'eau (5, 7) et audit conduit de sortie (9), ledit robinet mélangeur (1) étant monté au-dessous de ladite tablette de sorte que le robinet mélangeur (1) peut être actionné avec la pointe du pied sans interférer avec l'une ou l'autre desdites entrées d'eau (5, 7) ou dudit conduit de sortie (9).
